Europäisches Patentamt

European Patent Office

Office européen des brevets

(11) Publication number: **0 297 665**
**A2**

## (12) EUROPEAN PATENT APPLICATION

(21) Application number: 88201318.8

(51) Int. Cl.4: **G01V 9/04**

(22) Date of filing: 27.06.88

(30) Priority: 01.07.87 GB 8715390

(43) Date of publication of application:
**04.01.89 Bulletin 89/01**

(84) Designated Contracting States:
**DE FR GB IT**

(71) Applicant: **PHILIPS ELECTRONIC AND ASSOCIATED INDUSTRIES LIMITED Philips House 188 Tottenham Court Road London W1P 9LE(GB)**

(84) **GB**

(71) Applicant: **N.V. Philips' Gloeilampenfabrieken Groenewoudseweg 1 NL-5621 BA Eindhoven(NL)**

(84) **DE FR IT**

(72) Inventor: **Barnard, Michel Edwin PHILIPS RESEARCH LABORATORIES Cross Oak Lane Redhill Surrey RH1 5HA(GB)**
Inventor: **Jackson, John PHILIPS RESEARCH LABORATORIES Cross Oak Lane Redhill Surrey RH1 5HA(GB)**

(74) Representative: **Boxall, Robin John et al PHILIPS ELECTRONICS Patents and Trade Marks Department Centre Point New Oxford Street London WC1A 1QJ(GB)**

(54) Radiation source detection.

(57) Apparatus is provided for detecting a distant point source of radiation S with a low false alarm rate when set in a scene comprising adistribution of confusing sources of radiation. An image of the scene is formed as an array of picture elements OPE, each original picture element having a brightness value, which are transformed into array of processed picture elements PPE. Them brightness value of each processed picture element is compared with a threshold brightness level THR pre-assigned to that processed picture element, a point source being detected if the brightness value of any processed picture element exceeds the pre-assigned threshold brightness value. According to the invention an expectation of the range to the point source is obtained and the radiant intensity of the source is known. The attenuation of the source radiation by the atmosphere between the point source and the apparatus is calculated (22) and the expected processed picture element brightness value due to the point source calculated. A threshold brightness value THR based upon the expected processed picture element brightness value is then assigned to each processed picture element.

The apparatus may be for use on board a ship at sea to detect an incoming sea-skimming missile comprising the source S.

## Fig.5.

# RADIATION SOURCE DETECTION

This invention relates to apparatus for detecting a distant point source of radiation with a low false alarm rate when said point source is set in a scene comprising a distribution of sources of radiation, said apparatus comprising first means for forming an image of the scene as an array of picture elements, each original picture element having a brightness value, second means for transforming the array of original picture elements into an array of processed picture elements, the brightness value of each processed picture element being set by said second means in accordance with the brightness value of one or more of the brightness values of the original picture elements, and third means for comparing the brightness value of each processed picture element with a threshold brightness level pre-assigned to that processed picture element, a point source being detected if the brightness value of any processed picture element exceeds said pre-assigned threshold brightness value.

Interest in such distant point sources of radiation arises because they may be associated with objects of importance. Infrared (I.R.) radiation, in particular, may arise from point sources such as human beings, vehicle exhaust and radiator cooling systems, or the propulsion systems of aircraft or powered airborne missiles, or the bodies of fast moving aircraft or missiles which are heated by friction with the air. This last source is of particular interest if hostilities are taking place in a maritime environment since such a source may be associated with the heated nose cone of a sea-skimming missile directed towards a ship.

To detect such a missile a thermal imaging apparatus may be installed on the ship to provide a thermal image of the region immediately above and below the horizon all around the ship. To detect an airborne compact infrared source in this thermal image, a linear filter may be applied to the picture signals of the image and the resulting image thresholded as described by L. Bohmer in a paper entitled "Detection of Compact Sources" in Proceedings of EURASIP 1986 pages 657 to 660. The threshold level used may be set uniformly for all the picture element signals or may be varied for local optimisation.

A major problem with maritime IR scenes in the 8-12 micron band is that wave crests on the sea surface appear brighter than the rest of the sea within the image and, having significant energy at high spatial frequencies, they can appear very similar to compact airborne sources. The reliable detection of low flying compact sources in such images without also falsely detecting a large number of points due to background interference is thus quite difficult.

The brightness of these wavecrests increases with their distance in the image below the horizon, which corresponds to a decreasing distance from the sea surface to the viewing position. In order to prevent a large number of false detections, the detection threshold applied to the filtered image must therefore be raised in the lower parts of the image compared to the threshold over the sky. Raising the threshold arbitrarily, however, could easily result in a large number of airborne sources going undetected. It is an object of the invention to provide a more controlled method of locally adjusting the detection threshold at any given elevation in the image.

The invention provides apparatus for detecting a distant point source of radiation as set out in the opening paragraph of this specification characterised in that fourth means are provided for obtaining an expectation of the range to the point source, in that an expectation of the radiant intensity of the source is known and stored in the apparatus, in that fifth means are provided for calculating the attenuation of the source radiation by the atmosphere between the point source and the apparatus, in that sixth means are provided for calculating the expected processed picture element brightness value due to the point source based upon said expectation of the source radiant intensity, said expectation of the source range and said calculated atmospheric attenuation, and in that seventh means are provided for pre-assigning to each processed picture element a threshold brightness value based upon said expected processed picture element brightness value.

The invention thus relies on scene information known a-priori. In the case of apparatus for use on board a ship at sea to detect a sea-skimming vehicle comprising the source, the means for measuring the range may comprise means for measuring the angular depression of the source as observed from the apparatus set at a predetermined height above sea level and means for calculating the range from said angular depression and said predetermined height. In this case the method of setting local thresholds relies on the fact that the geometry of a maritime scene is known a-priori. Thus the distance of any point on the sea surface from a given viewing position is a known function of the depression angle of that point below the horizon subtended at the viewing position and the height of that viewing position above the sea. Thus if the viewing position is at height h above the sea surface, r is the earth's radius and Y is the angle between the line of sight and the downward vertical then the distance d of any part of the sea surface is given by

$$d = (r+h)\cos Y - \sqrt{(r+h)^2\cos^2 Y - 2rh - h^2}$$

(1)

The distance of the background at any point in the image is obviously also the maximum distance that any airborne object at that depression angle in the image may be from the viewing position. This maximum distance for an airborne source can be converted into a minimum brightness in the image for such a source if both the minimum likely IR irradiance of the source is known, and if the atmospheric attenuation of IR radiation is a known function of distance. Both of these pieces of information can be known in advance. The minimum source irradiance is available as a-priori knowledge for a particular compact source. The atmospheric attenuation of IR radiation can be calculated using the LOWTRAN 4 programme given by Selby et al in Air Force Geophysics Laboratory Report No AFGL-TR-78-0053, "Atmospheric Transmittance/Radiance Computer Code LOWTRAN 4". This programme takes various meteorological measurements such as air temperature as well as information on the type of propagation path, which in this case is a path across open sea, and predicts to a high degree of accuracy the atmospheric attenuation of the IR.

A minimum expected brightness for an airborne source can be converted to a local detection threshold by setting the threshold just below the output from the linear filter due to a minimum brightness source. This gives a locally set detection threshold that rises in the required manner below the horizon in such a way as not to preclude the detection of any airborne sources in this region of the image. The threshold at and above the horizon may be set to a uniform value.

Alternatively, the range of the source may be obtained from a radar set provided at the apparatus and which comprises means for measuring the range of an object associated with the point source.

The means for forming an image of the scene may comprise means for scanning an image of the scene containing the horizon around the ship transversely across a line array of radiation detectors normal to the horizon, each detector in the array being associated with a predetermined angular depression and the set threshold level associated with that depression being applied to all picture signals originating from that detector. Such an imaging means may be mounted high in the ship superstructure to maximise the apparatus height above sea level and hence to maximise the measured range. The imaging means may be mounted upon a stabilised platform to cancel out the effects of roll and pitch of the ship. A typical imaging apparatus is IRSCAN (Trade Mark) developed by Hollandse Signaalapparaten BV, The Netherlands.

An embodiment of the invention will now be described with reference to the accompanying drawings in which

Figure 1 depicts a sea-skimming missile approaching a ship;

Figure 2 shows the geometry of the situation of Figure 1;

Figure 3 shows a thermal imaging apparatus designed to provide an all-round horizon picture;

Figure 4 shows the picture provided by the apparatus of Figure 3; and

Figure 5 shows apparatus in accordance with the invention for setting picture signal detection thresholds.

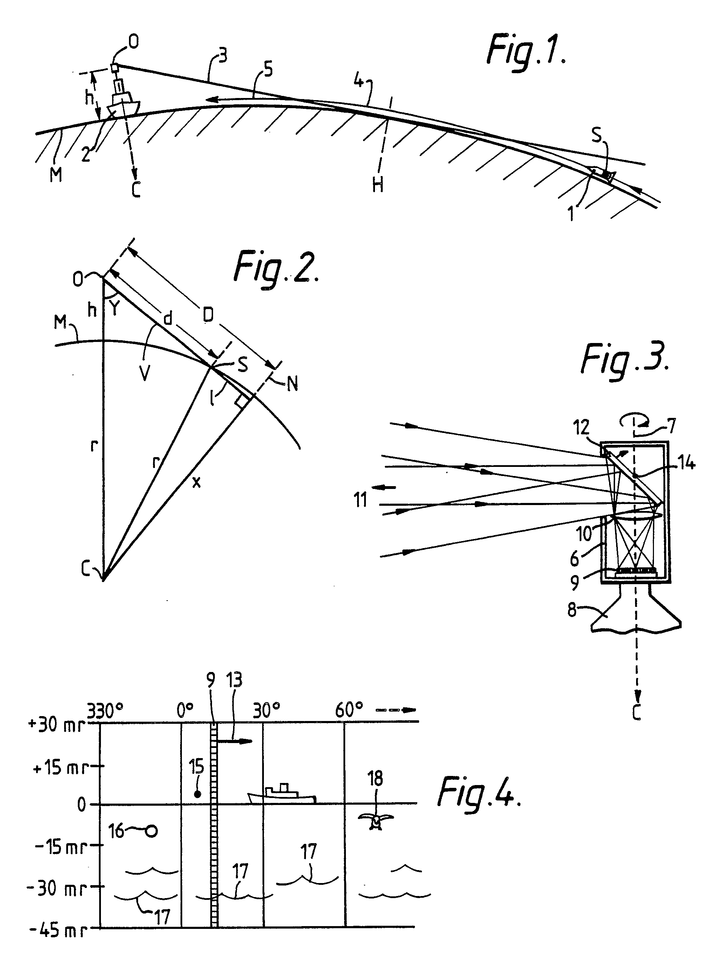

Referring to Figure 1, a sea-skimming missile 1, comprising a source S of infrared radiation, is shown approaching a target ship 2 over the surface of the sea M. For clarity, the curvature of the sea surface is shown greatly exaggerated in relation to the height of the missile above the sea and also in relation to the height above M of a point of observation 0 on the ship. The line of sight 3 is shown from 0 to the horizon H. It will be seen that, when at extreme range, the missile may be below the horizon and not visible. On its flight towards the target ship, the missile will rise above the horizon and be visible against a sky background, as at 4. Later in its flight the missile will fall below the horizon and be visible against a sea background, as at 5.

In Figure 2 the geometry of the situation of Figure 1 is shown, it being assumed for simplicity that the source S is at sea level and is visible below the horizon as seen from 0.

The distance d of S from 0 is given by

$$d = D - l$$

D and l being the distances of 0 and S respectively from the normal N from the earth's centre C to the line of sight V from 0 to S. If r is the earth's radius, and x is the length of the normal N from C to the line of sight V, and Y is the angle of depression of V measured from the downward vertical at 0, then

$$D = (r+h)\cos Y,$$
$$l = \sqrt{r^2 - x^2}, \text{ and}$$
$$x = (r+h)\sin Y$$

from which $d = (r+h)\cos Y - \sqrt{r^2 - (r+h)^2 \sin^2 Y}$

Substituting $\sin^2 Y = 1 - \cos^2 Y$, it follows that

$$d = (r+h)\cos Y - \sqrt{(r+h)^2\cos^2 Y - 2rh - h^2 - 1}$$

Thus, given only the height h and the depression angle Y, the distance d can be calculated. The distance d is the maximum distance that a source of radiation below the horizon can have if observed to have a depression angle Y. In the case of a sea-skimming missile observed at angle Y, the source of radiation will be above the sea surface by, for example, 2 metres and hence the range of the missile will be somewhat less than the calculated value d.

Figure 3 shows the optical and mechanical components, in schematic form, of a thermal imaging apparatus which is provided as a means of observation at the point 0 on the ship. The apparatus, contained within a casing 6, is rotated continuously about an axis 7 with respect to a base 8 which is gyro-stabilised, by means not shown, to maintain the axis 7 vertical, i.e. directed to the earth's centre C. Within the casing, a horizontal linear array 9 of infra-red detectors is provided, the length of the array lying in the plane of the drawing. An IR objective lens 10, having its optical axis coaxial with axis 7, focuses an image of a distant horizon scene 11, via 45 degree mirror 12, onto the horizontal plane containing the detector array. The detector array, lens and mirror 12 rotate as one with the casing, the projected image of the array remaining vertical at the horizon throughout the 360 degree rotation. Figure 4 shows a typical horizon scene with the projected image of the detector array 9 shown vertical and scanning horizontally 13. In a typical apparatus 120 detectors would be provided in the array and the focal length of the lens 10 chosen so that the projected length of the array covers a vertical angle of 75 milliradians (mr). The mirror 12, nominally set at 45 degrees to axis 7, is arranged to be pivotable about a horizontal axis 14 normal to the plane of the drawing to be set to cover a desired vertical field of view. As shown in Figure 4, 30 mr above the horizon and 45 mr below the horizon are covered. Thus a point source 15 some 5 mr above the horizon is seen against a sky background and a closer sea-skimming source 16 some 10 mr below the horizon is seen against a sea background. Wave crests 17 closer to the apparatus can also constitute point sources of radiation, as can a seagull 18.

Thus, each detector in the linear array traces out a horizontal path in the scene at a constant angular elevation or depression and provides an analogue signal proportional to the infrared radiance of the scene details it encounters. As noted above with reference to equation 1, a given angular depression is associated with a calculable range to the sea surface at that depression. Thus for a given setting of mirror 15, each detector tracing out a path below the horizon is associated with a range to the sea surface and hence a maximum range of a radiation source detected at the associated depression.

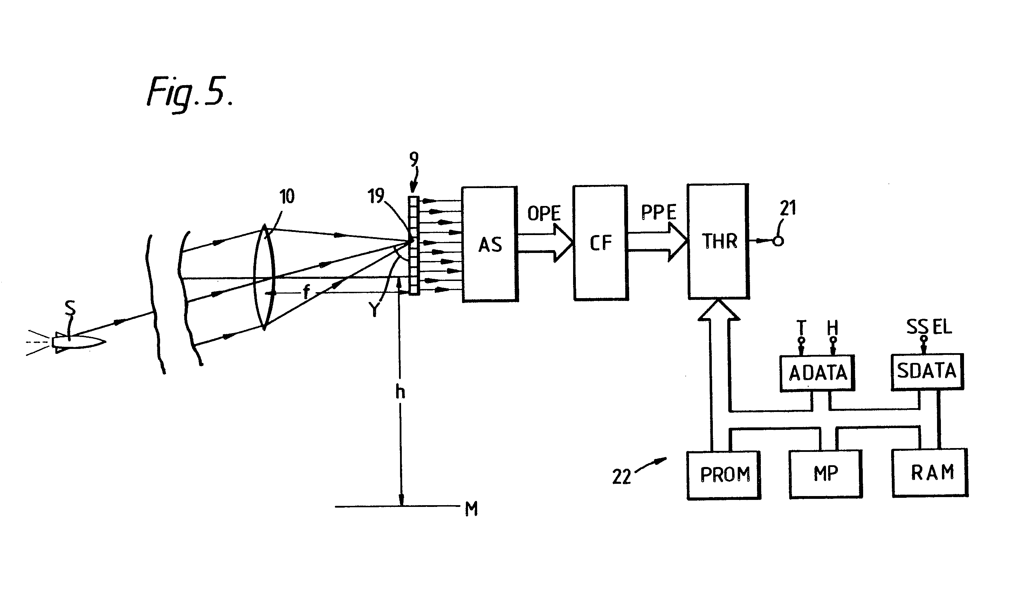

Figure 5 shows apparatus, using the thermal imaging, or scanning, apparatus of Figure 3, for detecting a distant point source of radiation with a low false detection rate, the point source being set in a scene comprising a distribution of sources of radiation such as is depicted in Figure 4. For simplicity the thermal imaging apparatus is shown having a vertical array of detectors 9 due to the rectifying effect of mirror 12. The tangent of the depression angle Y for a source S is given by the ratio of the lens focal length f to the distance of the detector concerned 19 along the array from the point associated with the horizontal plane, shown in Figure 5 for simplicity as the lens axis. Thus each detector in the array is associated with a predetermined depression Y and a calculable maximum source range as noted in the previous paragraph. The set of maximum ranges associated one each with the detectors can be precalculated from equation 1 and stored as fixed data in a programmable read only memory PROM and accessed as required. Alternatively, a computer programme devised to solve equation 1 can be stored in PROM along with the value of h for a particular installation. The value of Y associated with each detector of the array can then be assigned according to the setting of mirror 14 and the set of maximum ranges calculated accordingly as required.

Referring to Figure 5, the output of each detector in the array, which is a continuous electrical signal, is fed into an amplify-and-sample unit AS. These signals may be fed into the AS unit in parallel or multiplexed onto fewer lines before being fed into the unit. Within the AS unit the signals are amplified and any equalisation necessary between different detectors is carried out. These amplified signals are then sampled at regular time intervals which correspond to regular spatial intervals in the image due to the motion of the detector array across the image, and the signal measured at the sampling point quantised in an analogue to digital converter to give a brightness value. The output of the AS unit is thus an array of original picture elements (OPEs) each having a brightnes value encoded in a digital form.

The data array of OPEs is then passed as shown to a convolution filter unit CF. This unit performs a two-dimensional convolution between the input array of OPEs and a predetermined array of filter coefficients. The result of this convolution is an array of processed picture elements PPE, which is a filtered version of the input OPE array. The CF unit may be implemented as a hardwired digital circuit or as a microprocessor connected to a databus with a programme stored in PROM. The convolution filter implemented by this unit is also referred to as the matched filter. The matched filter is designed on the basis that a distant point source will be below the resolving power of the lens 10. Along with atmospheric scattering effects, this produces a gaussian distribution of IR energy in both azimuth and elevation and hence also on the output of any detector which scans the gaussian distribution. The matched filter is designed to have a frequency spectrum corresponding to the Fourier transform of the expected width of gaussian pulse due to the source. These forms of preprocessing are well known in the art and will not be described further.

The array of PPEs from the CF unit is passed to a threshold unit THR. This THR unit compares the brightness values of each PPE against a threshold brightness value supplied from computing means to be described. Each PPE may have its own threshold brightness value, although for a maritime scene all PPEs corresponding to point sources at any one elevation / depression angle will have the same threshold brightness value. If the brightness value of any PPE is greater than the corresponding threshold, then an output detailing the position and brightness value of the PPE appears at terminal 21 to be fed to arrangements for intercepting the missile (not shown).

The threshold level computing means 22 comprises a microprocessor MP, a random access memory RAM, a programmable read only memory PROM, a device ADATA for generating atmospheric IR absorption data given inputs such as T, the atmosphere temperature and H the atmosphere humidity, and a device SDATA for storing information relating to the IR outputs of possible sources which can be selected for input to the computation by a selection input SSEL.

The first step in providing a programme for the computing means 22 is to calibrate the scanning apparatus with a source of known radiance B watts per steradian at a known short distance k set in a scene of known temperature and emissivity. If a signal amplitude $R_c$ volts is obtained at the threshold level device input, then the signal $R_m$ obtained from a source of M watts per steradian, known a-priori, at a range d is given by:-

$$R_m = R_c \cdot \frac{M}{B} \cdot \frac{k^2}{d^2} \quad ---2$$

in the absence of atmospheric attenuation.

The calibration source may be mounted on the ship 2 to provide regularly updated calibration, the source detection apparatus then functioning to compare the missile source with the calibration source. Also, friendly ships or aircraft at known longer ranges may constitute calibration sources observed through known intervening atmospheres. The simple inverse square law calculation of equation 2 is, however, considerably modified by the effect of atmospheric attenuation.

Selby et al in Air Force Geophysics Laboratory Report No. AFGL-TR-78-0053 1978, "Atmospheric Transmittance/Radiance Code LOWRAN 4" have provided a model for the atmospheric attenuation of IR radiation reduced to the form of an algorithm suitable for programming a computer. In this algorithm the visible and IR regions are divided into bands, typically 10 nanometres wide. The attenuation is calculated in each band, there being different attenuation coefficients in each band, and the total being integrated for all bands relevant to the source and to the spectral sensitivity of the detectors in array 9. In each band, account is taken of spectral lines which may saturate, the skirts of the lines obeying Beer's Law but the peak of the line obeying another law. The algorithm takes account of the water vapour content of the atmosphere and hence requires as input the temperature T and relative humidity H shown in Figure 5. It can also take into account aerosols, such as mist or fog and is available in rural, urban or maritime models. Another feature taken into account by LOWTRAN 4 is the radiance of the atmosphere as a function of the angle of the line of sight with the sun direction. This atmospheric radiance affects the brightness of the scene in which the point source is set and hence the difference signal generated by the point source as against the background scene.

Thus, with the LOWTRAN programme loaded into the threshold computing means 22, the expected brightness value from a given source is calculated for each PPE, which is then converted by another programme on the same microprocessor to a threshold brightness value for that PPE, which is less than the corresponding expected brightness value.

The invention has been described in relation to the detection of sea skimming missiles. But the invention can also be applied to all-round surveillance from a land based establishment. With the apparatus set high above the centre of an establishment surrounded by open country, for example, the range to any part of open ground seen at each particular azimuth and depression from the apparatus can be known in advance from the known land contours and stored for use in threshold setting. Likewise the source strengths for particular sources such as human beings, animals or vehicles can also be stored and used in the threshold calculation. In this event, the open country around the establishment could be landscaped to improve ground visibility from the apparatus. The invention could be applied to the protection of isolated human settlements, condominiums, etc.

## Claims

1. Apparatus for detecting a distant point source of radiation with a low false alarm rate when said point source is set in a scene comprising a distribution of sources of radiation, said apparatus comprising first means for forming an image of the scene as an array of picture elements, each original picture element having a brightness value, second means for transforming the array of original picture elements into an array of processed picture elements, the brightness value of each processed picture element being set by said second means in accordance with the brightness value of one or more of the brightness values of the original picture elements, and third means for comparing the brightness value of each processed picture element with a threshold brightness level pre-assigned to that processed picture element, a point source being detected if the brightness value of any processed picture element exceeds said pre-assigned threshold brightness value, characterised in that fourth means are provided for obtaining an expectation of the range to the point source, in that an expectation of the radiant intensity of the source is known and stored in the apparatus, in that fifth means are provided for calculating the attenuation of the source radiation by the atmosphere between the point source and the apparatus, in that sixth means are provided for calculating the expected processed picture element brightness value due to the point source based upon said expectation of the source radiationintensity, said expection of the source range and said calculated atmospheric attenuation, and in that seventh means are provided for pre-assigning to each processed picture element a threshold brightness value based upon said expected processed picture element brightness value.

2. Apparatus as claimed in Claim 1 for use on board a ship at sea to detect a sea-skimming vehicle comprising the source, characterised in that the fourth means comprise means for measuring the angular depression of the source as observed from the apparatus set at a predetermined height above sea level and means for calculating the range from said angular depression and said predetermined height.

3. Apparatus as claimed in Claim 1, characterised in that the fourth means comprise a radar set provided at the apparatus to measure the range of an object associated with the point source.

4. Apparatus as claimed in Claim 2 characterised in that the first means for scanning an image of the scene containing the horizon around the ship transversely across a line array of radiation detectors normal to the horizon, each detector in the array being associated with a predetermined angular depression and the set threshold level associated with that depression being applied to all picture signals originating from that detector.

*Fig.1.*

*Fig.2.*

*Fig.3.*

*Fig.4.*

EP 0 297 665 A2

# Fig.5.